(19) **Europäisches Patentamt European Patent Office Office européen des brevets**

(11) **EP 4 692 149 A1**

(12) **EUROPEAN PATENT APPLICATION**
published in accordance with Art. 153(4) EPC

(43) Date of publication:
**11.02.2026 Bulletin 2026/07**

(21) Application number: **24780490.9**

(22) Date of filing: **27.03.2024**

(51) International Patent Classification (IPC):
***C08G 18/48*** (2006.01)   ***C08G 65/20*** (2006.01)

(52) Cooperative Patent Classification (CPC):
**C08G 18/48; C08G 65/20**

(86) International application number:
**PCT/JP2024/012315**

(87) International publication number:
**WO 2024/204388 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **31.03.2023 JP 2023056861**

(71) Applicant: **Hodogaya Chemical Co., Ltd.
Tokyo, 105-0021 (JP)**

(72) Inventors:
• **MATSUMOTO, Akihiro**
  **Tokyo 105-0021 (JP)**
• **HAMADA, Tatsuya**
  **Tokyo 105-0021 (JP)**
• **AOKI, Yoshikazu**
  **Tokyo 105-0021 (JP)**

(74) Representative: **Wächtershäuser & Hartz
Patentanwaltspartnerschaft mbB
Weinstraße 8
80333 München (DE)**

(54) **ACID-RESISTANT POLYURETHANE AND METHOD FOR PRODUCING SAME**

(57)    An acid-resistant polyurethane is obtained by using an acid-resistant polytetramethylene ether glycol comprising a copolymer of tetrahydrofuran and 2-methyl-tetrahydrofuran, wherein the retention rate of breaking strength or breaking elongation before and after acid treatment is 100% to 200%, and the method for producing the polyurethane is provided.

## Description

Field of the invention

The present invention relates to an acid-resistant polyurethane obtained from polytetramethylene ether glycol and a method for producing the same.

Background Art

Polytetramethylene ether glycol is one of polyols used as raw materials for polyurethane, polyester, and polycarbonate. Polyurethane and polyester are used for elastomers and spandex. Among polytetramethylene ether glycols, polytetramethylene ether glycol obtained by copolymerization of tetrahydrofuran (THF) and alkyltetrahydrofuran is known to have excellent softness and elongation characteristics when used as raw materials for spandex (Patent Documents 1-3, etc.).

In addition, polyurethane materials are used in the fields of oil-based and water-based paints, adhesives, urethane foams such as sealants, caulking materials and sponges, elastomers such as automobile parts, artificial leather and synthetic leather, and are useful resins or rubbers with wide applications.

Polytetramethylene ether glycol has an ether binding site that is degradable to acid in its constituent units. Therefore, in view of recent environmental problems such as acid rain, it is desired that polytetramethylene ether glycol and polyurethane materials using polytetramethylene ether glycol as the main raw material have improved acid resistance and environmental resistance that do not deteriorate in physical properties such as strength and stretchability due to acid exposure (Patent Documents 4 and 5).

PRIOR ART REFERENCES

Patent Documents

Patent Document 1: Japanese Unexamined Patent Publication No. 2011-162780
Patent Document 2: Japanese Patent Publication No. 4144656
Patent Document 3: International Publication No. 2018/220983
Patent Document 4: International Publication No. 2015/152066
Patent Document 5: Japanese Unexamined Patent Publication No. 2018-119107
Patent Document 6: International Publication No. 2023/145554

Summary of the Invention

Problems to be Solved by the Invention

While it is desired to design polyurethane materials with excellent environmental resistance, it is also desired to design materials that reduce the environmental burden of polyurethane materials. If it is possible to produce polyurethane materials from biomass materials, the environmental burden will be reduced. Therefore, there is a desire for materials that have excellent environmental resistance such as acid resistance similar to or higher than conventional polyurethanes and that can be produced from biomass materials. The present invention subjects to provide an acid-resistant polyurethane obtained by using polytetramethylene ether glycol and a method for producing the polyurethane.

Means for Solving the Problems

The present invention has been obtained as a result of earnest examination of the above problems, and the gist of the present invention is as follows.

[1] An acid-resistant polyurethane obtained from polytetramethylene ether glycol consisting of a copolymer of tetrahydrofuran and 2-methyltetrahydrofuran, wherein a retention rate of breaking strength or breaking elongation before and after acid treatment is 100% or more to 200% or less.
[2] The acid-resistant polyurethane according to [1], wherein a number average molecular weight of the polytetramethylene ether glycol is 500 or more to 5000 or less.
[3] The acid-resistant polyurethane according to [1], wherein a biobased carbon content of the 2-methyltetrahydrofuran is 95% to 100%.

[4] The acid-resistant polyurethane according to [1], wherein a molar ratio of the monomer-derived components of tetrahydrofuran and 2-methyltetrahydrofuran in the polytetramethylene ether glycol is 97:3 to 88:12.

[5] The acid-resistant polyurethane according to [1], wherein a ratio of the biomass-derived raw material contained in the polytetramethylene ether glycol is 3 mass% or more to 100 mass% or less.

Effect of the Invention

The polyurethane material excellent in acid resistance can be produced by using the polytetramethylene ether glycol containing 2-methyltetrahydrofuran as a comonomer. The polytetramethylene ether glycol as a raw material of the polyurethane of the present invention can be produced from the biomass-derived raw material, and is a highly environmentally compatible material from the viewpoint of environmental burden.

Description of Embodiments

Embodiments of the present invention will be described in detail below. The present invention is not limited to the following contents, and may be modified in various ways within the scope of the gist.

"2-Methyltetrahydrofuran (2MeTHF)" in the "copolymer of tetrahydrofuran and 2-methyltetrahydrofuran" of the present invention is generally produced from biomass-derived raw materials by the furfural process or the levulinic acid process. 2MeTHF related to the "acid-resistant polytetramethylene glycol" of the present invention can be used without being limited to those produced by these processes. 2MeTHF derived from biomass-derived (plant-derived) raw materials is preferable for the countermeasures against the problems of oil resources and global warming in recent years. Furfural is an environmentally friendly compound that can be synthesized from biomass raw materials consisting of polysaccharides such as cellulose, hemicellulose, and lignin, and can be recovered from agricultural wastes such as corn cores and sugar cane pomaces.

As an index to show the degree of the biomass-derived (plant-derived) component in a material, "biobased carbon content" is known, which indicates the percentage (%) of the carbon mass of the biomass-derived component out of the total carbon mass in a product. Carbon mass from natural polymers such as starch powder and vegetable fiber is also included. The measurement test of the bio-based carbon content is carried out by the radiocarbon (C14) measurement method (ASTM D6866 standard or International Standard ISO 16620 carbon isotope ratio measurement). The bio-based carbon content of 2-methyltetrahydrofuran derived from plants is preferably 95% to 100%, more preferably 97% to 100%, and more preferably 100%.

The term "tetrahydrofuran" in the "copolymer of tetrahydrofuran and 2-methyltetrahydrofuran" of the present invention refers to tetrahydrofuran (THF) which is another raw material related to the "polytetramethylene glycol" of the present invention. Specifically, tetrahydrofuran derived from petroleum, biomass-derived, byproduct, etc., but is not limited thereto. Like 2MeTHF, THF derived from biomass-derived raw materials is preferable in order to contribute to the problems of petroleum resources and global warming and to demonstrate its purpose. When tetrahydrofuran (THF) to be used is produced from plant-derived (or biomass-derived) raw materials, THF produced by a known method such as furfural method may be used. The biobased carbon content (%) of THF is preferably 97.00 to 100%, more preferably 100%.

The method for producing the "Polytetramethylene ether glycol comprising Copolymer of Tetrahydrofuran and 2-Methyltetrahydrofuran" of the present invention will be described below. Specifically, the "polytetramethylene ether glycol" of the present invention can be produced by the copolymerization reaction of tetrahydrofuran (THF) and 2-methyltetrahydrofuran (2MeTHF). In the copolymerization process, the ratio of THF to 2MeTHF (mass ratio) can be arbitrarily selected in consideration of required performance and cost (specifically, the cost of the copolymerization reaction step, reaction time, percent yield, amount yield, physical properties' values of the resulting copolymerization reactant or polytetramethylene ether glycol, physical properties of the polyurethane resin obtained by using the polytetramethylene ether glycol, and other related performance and costs). However, if the ratio of 2MeTHF is extremely low, the expected performance cannot be achieved. On the other hand, if the ratio of 2MeTHF is too high, the cost is disadvantageous due to the decrease in reactivity. Therefore, the ratio of THF to 2MeTHF (mass ratio) is preferably 99:1 to 50:50, more preferably 97:3 to 55:45, and more preferably 93:7 to 60:40.

In the manufacturing method of the present invention, the copolymerization reaction of THF and 2MeTHF is preferably carried out by adding a strong acid catalyst of 5 to 40 mass% to the total mass of THF and 2MeTHF. The lower limit concentration of the strong acid catalyst is preferably 5 mass%, more preferably 8 mass%, and more preferably 15 mass% from the viewpoint of good reaction conversion and good yield. The upper limit concentration of the strong acid catalyst is preferably 40 mass%, and more preferably 36 mass% from the viewpoint of avoiding a decrease in the molecular weight at reaction equilibrium due to a large amount of reactive species.

In the copolymerization reaction of THF and 2MeTHF of the present invention, THF and 2MeTHF are mixed at the above ratio, and a strong acid catalyst is charged to react while maintaining a temperature of 0-50°C. Examples of strong acid catalysts are acetic anhydride, perchloric acid, fluorosulfonic acid, and fuming sulfuric acid. The strong acid catalyst may use a single type of strong acid or a combination of two or more strong acids. When two or more kinds of strong acids are used, they may be used in a temperature range of 0°C to 50°C in several steps.

The reaction product after polymerization reaction is hydrolyzed to obtain polytetramethylene ether glycol. The hydrolysis is preferably carried out at a temperature of 30-120°C by adding 10-100 mass% of water to the reaction solution. The polytetramethylene ether glycol as a raw material of the polyurethane of the present invention is obtained by separating the aqueous layer from the reaction solution after hydrolysis and separating the unreacted raw material and the like.

The number average molecular weight ($M_n$) of the polytetramethylene ether glycol obtained by the copolymerization reaction of THF and 2MeTHF is 500 or more to 5000 or less. When the number average molecular weight is less than 500, it becomes hard when molded into a polyurethane resin, and the rubber elastic modulus and tensile strength decrease. When the number average molecular weight is more than 5000, the elongation becomes too large and it is not suitable as a practical resin.

The ratio of the components derived from each monomer (THF, 2MeTHF) in a polytetramethylene ether glycol consisting of a copolymer of tetrahydrofuran (THF) and 2-methyltetrahydrofuran (2MeTHF) synthesized by the above manufacturing method or a THF-2MeTHF copolymer which is simply a synthesized polyol can be examined by performing nuclear magnetic resonance spectroscopy (NMR measurement) of the synthesized polyol. The ratio of each monomer component ($R_{THF}$: $R_{2MeTHF}$) (molar ratio) is preferably 99:1 to 50:50, more preferably 98:2 to 70:30, and particularly preferably 97:3 to 88:12.

The polytetramethylene ether glycol used as a raw material for the polyurethane of the present invention can be obtained from THF and 2MeTHF, and both preferably contain a biomass-derived raw material. The degree to which the copolymer contains a biomass-derived raw material on a mass basis can be evaluated by calculating the bioconversion ratio of the polymer based on the content ratio of each comonomer to the mass of the copolymer and the biobase carbon content ratio. The bioconversion ratio is an index of the proportion of biomass-derived raw material contained in the material. The bioconversion ratio is preferably about 3 mass% or more, more preferably 5 mass% or more, and more preferably 10 mass% or more. It is most preferably 100 mass%, but the upper limit is not particularly limited. The specific calculation method of the bioconversion ratio is described below.

The acid-resistant polyurethane of the present invention can be produced by reacting polytetramethylene ether glycol composed of a copolymer of THF and 2MeTHF with a polyisocyanate-containing raw material, specifically, a main raw material such as a chain extender. Specific examples of the method for producing the acid-resistant polyurethane will be described below. However, the method for producing the acid-resistant polyurethane is not limited to the following specific examples, so long as the method includes reacting the polytetramethylene ether glycol with a polyisocyanate-containing raw material, and polyurethane without losing the object of the present invention can be obtained.

In the production reaction of the acid-resistant polyurethane of the present invention, the polyisocyanate compound includes polyisocyanates having two or more isocyanate groups in the molecule, such as tolylenediisocyanate (TDI), diphenylmethane diisocyanate (MDI), xylylenediisocyanate (XDI) isophorone diisocyanate (IPDI), hexamethylene diisocyanate (HDI), naphthalene diisocyanate (NDI), hydrogenated diphenylmethane diisocyanate, etc., and these compounds can be used singly or by mixing two or more kinds.

The chain extender which can be used in the manufacturing reaction of the acid-resistant polyurethane is one having two or more hydroxyl groups or amino groups, for example, ethylene glycol, 1,3-propanediol, 1,4-butanediol, 1,5-pentanediol, 1,6-hexanediol, glycerin, trimethylolpropane, ethylenediamine, propylenediamine, phenylenediamine, diaminodiphenylmethane, etc. These can be used alone or in a mixture of two or more kinds.

In the manufacturing reaction of the acid-resistant polyurethane, it is possible to produce the acid-resistant bio-polyurethane resin material by using a combination of 2MeTHF, biotetrahydrofuran, biobutanediol and the like starting from biomass-derived raw materials (Patent Documents 3 and 6). When a compound is referred to by adding "bio" such as "biotetrahydrofuran," "biobutanediol," "biopolyol," or "biopolyether polyol," it means a low molecular or high molecular compound derived from biomass having physical properties equivalent to petroleum-based compounds. When a compound is referred to as "bio-polyurethane material," it means a material in which at least 50 mass% or more of the raw material consists of a component derived from a biomass-derived compound. The bio-polyurethane material has a biomass-derived component content of 50-80 mass% based on 100 mass% of the polyurethane material. In general, the higher the biomass-derived component content is, the more environmentally friendly it is. However, to achieve 80 mass% or more, raw materials such as polyisocyanate compounds and chain extenders must also be biomass-derived in addition to 2MeTHF, which is a difficult level and economically disadvantageous to the current technology.

The acid-resistant polyurethane of the present invention can be produced by a known method. For example, the polytetramethylene ether glycol obtained by the copolymerization reaction of THF and 2MeTHF may be reacted with a polyisocyanate or a chain extender in a batch, or the acid-resistant polytetramethylene ether glycol may be reacted with the polyisocyanate to obtain an isocyanate terminated prepolymer, and then the chain extender may be added to carry out the elongation reaction.

In the reaction of the polyurethane material, an organometallic catalyst or the like may be added as necessary. Examples of the organometallic catalyst include organic tin catalysts such as dibutyltin oxide, dibutyltin diacetate, dibutyltin dilaurate, dibutyltin dichloride, dioctyltin dilaurate, nickel octylate, nickel naphthenate, cobalt octylate, cobalt naphthenate, bismuth octylate, bismuth naphthenate, and the like.

The polytetramethylene ether glycol as a raw material of the polyurethane of the present invention is a polytetramethylene ether glycol obtained by copolymerization reaction of tetrahydrofuran and 2-methyltetrahydrofuran having an alkyl group near the ether bond. The acid-resistant polyurethane obtained by using such polytetramethylene ether glycol is superior in acid resistance compared with the polyurethane obtained by using conventional polytetramethylene ether glycol.

As a concrete method for confirming the effect of the acid resistance of polyurethane, an actual sample of a polyurethane molded product obtained by using the polytetramethylene ether glycol as a raw material is subjected to acid treatment, and the strength physical properties of the resin before and after the acid treatment, specifically, the breaking strength and/or elongation at break, are measured and compared. Preferably, the physical properties after the acid treatment are maintained, or the physical properties are not extremely decreased, and more preferably, they are improved. Therefore, the retention ratio (If there is no change =100%, or it may be expressed as the rate of change of the numerical value before and after acid treatment (the JIS method of expressing the percentage of the numerical value increased or decreased as positive or negative)) of the breaking strength and/or elongation at break before and after the acid treatment is preferably 100% to 200%, as an index of the acid-resistant polyurethane.

As a concrete method for evaluating the acid resistance of polyurethane, it is possible to use a method based on the "immersion test" described in "Japanese Industrial Standard (Hereinafter, JIS)JIS K7312-1996 Physical Test Method for Thermosetting Polyurethane Elastomer Moldings," or to perform a test in which an aqueous acid solution of an appropriate kind and concentration is prepared, and a molded product sample is immersed in the aqueous acid solution at a predetermined target temperature for a certain period of time, and the physical properties before and after the acid treatment are compared. One example is an acid treatment test in which a molded product sample is immersed in an aqueous solution of sulfuric acid, hydrochloric acid, or acetic acid having a concentration of $1.0 \times 10^{-5}$-10 mass% at an immersion temperature of 5-70°C and a immersion time of 12 hours to 14 days, but the method is not limited to this method.

Examples

Hereinafter, the present invention will be described in detail with reference to Examples, but the present invention is not limited to the following Examples, and may be modified in various ways within the scope of the gist of the present invention.

[Synthesis of Various Polyols]

As the polytetramethylene ether glycols (hereinafter also referred to as polyether polyol or polyol) used in the examples of the present invention, as shown in Table 1, a polyol manufactured by Hodogaya Chemical Co., Ltd. (THF-2MeTHF) was used as the polytetramethylene ether glycol of the present invention, and as polyols not belonging to the present invention, a polyol manufactured by Hodogaya Chemical Co., Ltd. (Copolymer of tetrahydrofuran and 3-alkyltetrahydrofuran, Product name: PTG-L) and a polyol manufactured by Hodogaya Chemical Co., Ltd. (Polytetramethylene glycol, Product Name: PTG) were used. The THF-2MeTHF copolymer was synthesized by the method described in Patent Document 3 (WO 2018/220983) or Patent Document 6 (WO 2023/145554).

[Measurement of Biobased Carbon Content of Raw Materials]

THF and 2MeTHF were prepared as raw materials, and their biobased carbon content (%) was evaluated based on the measurement method of ASTM D6866-22 Method B (Geoscience Research Institute, Inc.). The biobased carbon content (%) of each raw material was 0% or 100% for THF, and 100% for 2MeTHF.

[Purification and Analysis of Raw Materials]

These raw materials for THF and 2MeTHF may be commercially available, and it is preferable to purify them before synthesis in order to suppress coloration after synthesis of the copolymer. Purification using acid (Specifically, strong acids such as sulfuric acid, nitric acid, or hydrochloric acid) and/or distillation was carried out by the method described in Patent Document 6, etc., and was used for synthesis of THF-2MeTHF copolymer. The purity of the raw materials was evaluated by gas chromatography (GC). As a specific example, the GC purity of 2MeTHF measured using the following apparatus was confirmed to be more than 99.90%.

Apparatus: Gas Chromatograph manufactured by Shimadzu Corporation, Model: GC-2014
Analytical Column: DB-1 manufactured by T & D (Inner diameter 0.25 mm x 30 m, film thickness 0.25 μm)

[Synthesis Examples 1-6] Synthesis of THF-2MeTHF Copolymerization Reactants

Details of Synthesis Example 3 of Synthesis Examples 1-6 are described below.

In a 20 L reaction vessel, 7250 g of THF (Manufactured by Kishida Chemical Co., Ltd., bio-based carbon content (%) =0%) and 1280 g of purified 2MeTHF (mass ratio of THF: 2MeTHF=85:15) were added and cooled at 0°C. In the reaction vessel, 140 g of 70% perchloric acid was added. Next, 1840 g of 25% fuming sulfuric acid was added dropwise at -5 to 5°C for 5 hours. The reaction solution was stirred at -5 to 5°C for 2 hours, 3713 g of water was added, heated to 70°C, and refluxed for 3 hours. After refluxing, the aqueous layer was removed after standing at 65-70°C. for 1 hour. In the oil layer, 950 g of water and 2230 g of THF were added, heated to 70°C, and refluxed for 3 hours. After refluxing, the water layer was removed after standing at 65-70°C for 1 hour. In the oil layer, 300 mL of ion-exchange resin (Model number: IRA-96S, manufactured by Organo Corporation) was added and stirred at room temperature (around 20-25°C) for 1 hour. The ion-exchange resin was filtered and removed, and concentrated under reduced pressure at 120°C. THF-2MeTHF copolymer (2050 g, 24% yield), which is a polytetramethylene ether glycol, was obtained as a clear viscous liquid (polyol manufactured by Hodogaya Chemical Co., Ltd.). The synthesis conditions of other synthesis examples are shown in Table 1.

In the embodiment of the present invention, the analytical instruments and methods used to measure the various properties of polytetramethylene ether glycol and the polyurethane sheets prepared are as follows.

[Determination of Number Average Molecular Weight ($M_n$)]

The hydroxyl value of polytetramethylene ether glycol was measured according to JIS K1557-1:2007, and the number average molecular weight ($M_n$) of polytetramethylene ether glycol was calculated.

[NMR Measurement (Calculation of Bioconversion Rate)]

The polyether structure in polytetramethylene ether glycol was analyzed by $^1$H-NMR analysis (Nuclear Magnetic Resonance System, JNM-ECZ400 S/L1 Type, manufactured by Japan Electronics Co., Ltd.), and the ratio of each monomer-derived component (THF: 2MeTHF) (molar ratio) in the synthesized THF-2MeTHF copolymer was measured.

Based on the molecular weight of each raw material of the copolymer, its biobased carbon content (%), and the ratio of each raw material component (molar ratio) measured by NMR, the ratio of the biomass-derived raw material in polytetramethylene ether glycol = bioconversion rate (mass%) was calculated using the following formula (1).

[Equation 1]

$$C_{BioPolyol} (\%) = \frac{M_{THF} \times C_{BioTHF}(\%) \times R_{THF} + M_{2MeTHF} \times C_{Bio2MeTHF}(\%) \times R_{2MeTHF}}{M_{THF} \times R_{THF} + M_{2MeTHF} \times R_{2MeTHF}} (\%) \quad \text{Equation (1)}$$

[In Equation (1), the meanings of the symbols for physical quantities, ratios, constants, and variables are as follows:

$C_{BioPolyol}$ (%):Bioconversion rate (%) of polytetramethylene ether glycol (polyol) having a polyether structure
$C_{BioTHF}$(%): Biobased carbon content of THF raw material (%)
$C_{Bio2MeTHF}$ (%) Biobased carbon content of 2MeTHF raw material (%)
$M_{THF}$: Molecular weight of THF = 72.11
$M_{2MeTHF}$: Molecular weight of 2MeTHF = 86.13
$R_{THF,}$ $R_{2MeTHF}$: Molar ratio of the ether structure derived from each monomer (THF and 2MeTHF) in polyol]

[Coloring Determination]

The degree of coloring of the obtained "polymer diol with polyether structure" was determined by colorimetry of the Hazen unit color number (APHA color) according to the test method described in JIS K0071-1:2007. The Hazen unit color number (APHA color) of the THF-2MeTHF copolymer of Synthesis Example 3 was 10.

The analysis results of the hydroxyl value, number-average molecular weight, molar ratio of each monomer-derived component, bioconversion rate, and Hazen unit color number of THF-2MeTHF copolymer in Synthetic Example 1-6 are summarized in Table 1. The tetrahydrofuran-2-methyltetrahydrofuran copolymer used for polytetramethylene ether glycol as a raw material of the acid-resistant polyurethane of the present invention is suitable for producing polyurethane with a small number of colors and little coloring.

[Table 1]

[Table 1] Synthesis of Polyol (THF-2MeTHF copolymer) and properties

| | Biobase carbon content in raw materials (%) | | Mass ratio of raw material in total amounts (%) | | OH value (mgKOH/g) | Number average molecular weight of synthesized polyol (Mn) | Ratio of components derived from each monomer in the synthesized polyol THF-2MeTHF copolymer $R_{THF}$ : $R_{2MeTHF}$ (molar ratio) | Bioconversion ratio of polyether structure in synthesized polyol (ms%) | Hazen unit color number |
|---|---|---|---|---|---|---|---|---|---|
| | THF | 2MeTHF | THF | 2MeTHF | | | | | |
| Synthesis Example 1 | 0% | 100% | 91% | 9% | 84.6 | 1,326 | 95.7 : 4.3 | 5.1% | 10 |
| Synthesis Example 2 | 0% | 100% | 65% | 35% | 57.1 | 1,965 | 89.5 : 10.5 | 12.3% | 10 |
| Synthesis Example 3 | 0% | 100% | 85% | 15% | 31.3 | 3,590 | 93.8 : 6.2 | 7.3% | 10 |
| Synthesis Example 4 | 100% | 100% | 70% | 30% | 31.4 | 3,569 | 92.3 : 7.7 | 100% | 25 |
| Synthesis Example 5 | 100% | 100% | 70% | 30% | 27.2 | 4,120 | 93.3 : 6.7 | 100% | 30 |
| Synthesis Example 6 | 100% | 100% | 73% | 27% | 25.4 | 4,426 | 93.7 : 6.3 | 100% | 15 |

[Examples 1-4 and Comparative Examples 1-6]

[Measurement of Physical Properties of Polyols for Synthesis of Polyurethane]

In preparation of the acid-resistant polyurethane of the present invention, the basic physical properties (Viscosity, acid value and moisture) of various polytetramethylene ether glycols or polyols prepared in the above-mentioned synthesis example were measured. Similarly, the basic physical properties of polyols (Manufactured by Hodogaya Chemical Co., Ltd. Product names: PTG-L, PTG), which are raw materials of polyurethane used as a comparative example, were measured.

[Measurement of Viscosity]

The viscosities of the synthesized polyols were measured at $40\pm1°C$ using a viscometer (Manufactured by Toki Sangyo Co., Ltd. Model: TV-100). The viscosities of polytetramethylene ether glycol were measured according to JIS K1557-5.

[Measurement of Acid Value]

The acid values of polytetramethylene ether glycol were measured according to JIS K1557-1:2007.

[Measurement of Moisture]

Water content (%) (mass% of water content) of the synthesized polyols was measured using a moisture meter (Manufactured by Nitto Seiko Analytech Co., Ltd., Model: CA-31).

The basic properties of the polyols are shown in Table 2. It was found from Table 2 that the acid-resistant polytetramethylene ether glycol used for the production of the acid-resistant polyurethane of the present invention have the same physical properties as the conventional polyols (PTG-L, PTG).

[Table 2]

[Table 2]

| Polyol | Corresponding Synthetic Example | Number average molecular weight (Mn) | viscosity (mPa·s) (40°C) | Acid value (mgKOH/g) | water content (ms%) |
|---|---|---|---|---|---|
| THF-2MeTHF | Synthetic Example 1 | 1,326 | 300 | 0.02 | 0.01 |
| | Synthetic Example 2 | 1,965 | 1000 | 0.02 | 0.01 |
| | Synthetic Example 3 | 3,590 | 4000 | 0.02 | 0.01 |
| PTG-L | - | 992 | 300 | 0.02 | 0.01 |
| | | 2,000 | 1000 | 0.02 | 0.01 |
| | | 3,562 | 4900 | 0.02 | 0.01 |
| PTG | - | 2,022 | 1000 | 0.02 | 0.01 |

[Polyurethane Synthesis - Preparation of Polyurethane Sheet]

(Example 1)

In a 200 mL reaction vessel, 100.0 g of THF-2MeTHF obtained in Example 1 (0.075mol, $M_n$=1326) was added, heated to 70°C, 34.9 g of 4,4'-diphenylmethane diisocyanate (MDI, manufactured by Tosoh Corporation) (0.139mol) was added, and stirred at 80°C for 3 hours. After the vessel was depressurized and defoamed, 5.5 g of 1, 4 butanediol (manufactured by Kishida Chemical Co., Ltd.) (0.061mo1) was added, and stirred at 85-90°C for 3 minutes. After stirring, the mixture was cast onto a glass plate, aged at 110°C for 3 hours in a dryer, cooled, and formed into a (poly)urethane sheet (2 mm thick).

(Examples 2-4)

In the polyurethane synthesis (molding) method of Example 1,

the polyol species, $M_n$, and amount (g, mol),
the amount of polyisocyanate compound (MDI) added and reacted (g, mol),
the amount of 1, 4 butanediol added and reacted (g, mol)

the amounts of polyol species and various raw materials used were changed as shown in Table 3 below, and polyurethane sheets (2 mm in thickness) were molded in the same manner as in Example 1 with the following conditions: 200 mL reaction vessel, temperature for each operation, stirring time, each procedure, and polyurethane sheet molding conditions.

(Comparative Examples 1-6)

The polyurethane sheets (2 mm in thickness) were obtained by molding in the same manner as in Examples 1-4 using PTG-L or PTG as the polyol, changing the amounts of each raw material used as shown in Table 3.

[Table 3]

[Table 3]

| | Polyol | Number average molecular weight of polyol Mn | Polyol amount (g, mol) | **MDI amount (g, mol)** | 1,4-butanediol amount (g, mol) |
|---|---|---|---|---|---|
| Example 1 | THF-2MeTHF | 1326 | 100.0 g (0.075 mol) | 34.9 g (0.139 mol) | 5.5 g (0.061 mol) |
| Example 2 | | 1965 | 100.0 g (0.051 mol) | 28.0 g (0.112 mol) | 5.2 g (0.058 mol) |
| Example 3 | | 3590 | 100.0 g (0.028 mol) | 21.4 g (0.086 mol) | 4.9 g (0.054 mol) |
| Example 4 | | 1965 | 100.0 g (0.051 mol) | 37.2 g (0.149 mol) | 8.4 g (0.093 mol) |
| Comparative Example 1 | PTG-L | 992 | 100.0 g (0.101 mol) | 42.1 g (0.168 mol) | 5.8 g (0.064 mol) |
| Comparative Example 2 | | 2000 | 100.0 g (0.050 mol) | 27.7 g (0.111 mol) | 5.2 g (0.058 mol) |
| Comparative Example 3 | | 3562 | 100.0 g (0.028 mol) | 21.5 g (0.086 mol) | 5.0 g (0.055 mol) |
| Comparative Example 4 | | 2000 | 100.0 g (0.050 mol) | 37.0 g (0.148 mol) | 8.4 g (0.093 mol) |
| Comparative Example 5 | PTG | 2022 | 100.0 g (0.050 mol) | 27.6 g (0.110 mol) | 5.2 g (0.058 mol) |
| Comparative Example 6 | | 2022 | 100.0 g (0.049 mol) | 37.0 g (0.148 mol) | 8.4 g (0.093 mol) |

[Measurement of Tensile Strength and Elongation]

Tensile tests of polyurethane sheets were conducted using a precision universal testing machine (Manufactured by Shimadzu Corporation, Autograph, Model: AG-1) in accordance with JIS K7312:1996. The test specimens were measured using dumbbells No. 3 at 23°C and 50% humidity. Tensile strength, elongation at break, 100% modulus (M100) and 300% modulus (M300) were determined.

[Measurement of Hardness]

The hardness of the prepared polyurethane sheets was measured in accordance with JIS K 7312:1996 and hardness (Type A) was measured.

Table 4 shows the properties (breaking strength, elongation at break, M100, M300, and hardness (JIS A) of the polyurethane sheets obtained in Examples 1-4 and Comparative Examples 1-6. In the table, NCO (%) indicates the content (mass%) of the NCO group in the polyurethane.

[Table 4]

[Table 4]

| | Polyol | Number average molecular weight of polyol Mn | NCO (%) | Measurement of Tensile | | | | |
|---|---|---|---|---|---|---|---|---|
| | | | | Tensile Strength (MPa) | Elongation at break (%) | M100 (MPa) | M300 (MPa) | Hardness (JIS A) |
| Example 1 | THF-2MeTHF | 1326 | 4 | 10 | 596 | 2.9 | 4.8 | 73 |
| Example 2 | | 1965 | 4 | 15 | 594 | 3.4 | 5.9 | 75 |
| Example 3 | | 3590 | 4 | 28 | 739 | 3.4 | 5.7 | 73 |
| Example 4 | | 1965 | 6 | 18 | 631 | 4.5 | 7.5 | 82 |
| Comparative Example 1 | PTG-L | 992 | 4 | 11 | 444 | 3.3 | 5.9 | 76 |
| Comparative Example 2 | | 2000 | 4 | 14 | 601 | 3.4 | 5.4 | 73 |
| Comparative Example 3 | | 3562 | 4 | 23 | 673 | 3.3 | 5.5 | 75 |
| Comparative Example 4 | | 2000 | 6 | 23 | 703 | 5.4 | 8.7 | 83 |
| Comparative Example 5 | PTG | 2022 | 4 | 14 | 748 | 3.2 | 5.3 | 75 |
| Comparative Example 6 | | 2022 | 6 | 31 | 715 | 5.2 | 8.8 | 82 |

As shown in Table 4, the general physical properties such as breaking strength, elongation at break, and hardness of polyurethane prepared using THF-2MeTHF of the present invention are almost equivalent to those of polyurethane prepared using PTG or PTG-L, which are conventional polyols.

[Evaluation of Acid Resistance]

The acid resistance of the obtained polyurethane sheets was evaluated in terms of retention (%) of the physical properties before and after acid treatment for (a) breaking strength and (b) elongation at break. Details are shown below.

(Acid Immersion Treatment of Polyurethane Sheets)

The polyurethane sheets obtained in the above examples and comparative examples were immersed in 2% sulfuric acid (pH1) for 7 days in an environment of room temperature 23°C and humidity 50% (atmosphere: air). Then, the polyurethane sheets were washed with water, wiped off the moisture, and left for 3 days at 23°C.

(a) Retention rate of breaking strength

After the acid immersion treatment as described above, tensile tests of various polyurethane sheets were conducted using a tensile testing machine. The breaking strength before and after the 2% sulfuric acid immersion treatment was compared, and the retention rate of breaking strength (%) was calculated. The results of the obtained polyurethane sheets before and after the acid treatment are shown in Table 5.

(b) Retention rate of breaking elongation

Tensile tests of various polyurethane sheets were carried out using a tensile testing machine with samples subjected to the acid immersion treatment in the same manner as described above. The elongation at break before and after the 2% sulfuric acid immersion treatment was compared, and the retention rate of breaking elongation (%) was calculated. The results of the obtained polyurethane sheets before and after the acid treatment are shown in Table 6 (NCO=4%) and Table 7 (NCO=6%).

[Table 5]

[Table 5]

| Polyurethane Sheet | Polyol | NCO (%) | Molecular weight of polyol | Strength at break (MPa) | Strength at break after acid treatment (MPa) | Retention rate Before-After acid treatment (%) |
|---|---|---|---|---|---|---|
| Example 1 | THF-2Me THF | 4 | 1326 | 10 | 19 | 188% |
| Example 2 | THF-2Me THF | 4 | 1965 | 15 | 17 | 108% |
| Example 3 | THF-2Me THF | 4 | 3590 | 28 | 29 | 106% |
| Comparative Example 2 | PTG-L | 4 | 2000 | 14 | 9 | 62% |
| Comparative Example 3 | PTG-L | 4 | 3562 | 23 | 7 | 31% |

[Table 6]

[Table 6]

| Polyurethane Sheet | Polyol | NCO (%) | Molecular weight of polyol | Elongation at break (%) | Elongation at break after acid treatment (%) | Retention rate Before-After acid treatment (%) |
|---|---|---|---|---|---|---|
| Example 2 | THF-2Me THF | 4 | 1965 | 594 | 643 | 108% |
| Example 3 | THF-2Me THF | 4 | 3590 | 739 | 759 | 103% |
| Comparative Example 2 | PTG-L | 4 | 2000 | 601 | 459.5 | 76% |
| Comparative Example 3 | PTG-L | 4 | 3562 | 673 | 441 | 66% |
| Comparative Example 5 | PTG | 4 | 2022 | 748 | 588 | 79% |

[Table 7]

[Table 7]

| Polyurethane Sheet | Polyol | NCO (%) | Molecular weight of polyol | Elongation at break (%) | Elongation at break after acid treatment (%) | Retention rate Before-After acid treatment (%) |
|---|---|---|---|---|---|---|
| Example 4 | THF-2Me THF | 6 | 1965 | 631 | 794 | 126% |
| Comparative Example 4 | PTG-L | 6 | 2000 | 703 | 654 | 93% |
| Comparative Example 6 | PTG | 6 | 2022 | 715 | 670 | 94% |

As shown in Tables 5-7, the retention rate of strength or elongation at break after acid treatment of polyurethane resin sheets prepared using the polytetramethylene ether glycol of the present invention is higher than those prepared using conventional polyols without 2MeTHF. Therefore, the acid-resistant polyurethane prepared using the polytetramethylene ether glycol of the present invention is superior in acid resistance compared with those using conventional polyols. This is considered to be due to the structure of 2MeTHF, which is one of the raw materials of the copolymer. That is, in the polytetramethylene ether glycol having the structure derived from 2MeTHF, the hydrogen of the methylene group (-CH$_2$-) adjacent to the ether bond is replaced by a methyl group, and the periphery of the ether bond is slightly crowded sterically. In addition, since the methyl group is electron-donating, it affects the electronic states of the methylene carbon and the oxygen atoms adjacent to the methylene carbon. The oxygen atoms in the ether bond are susceptible to attack by Lewis acid, which is electrophilic. However, in 2MeTHF, the electron density of the oxygen atoms is slightly lower and sterically crowded, which makes it less susceptible to attack by Lewis acid. As a result, the acid resistance is improved.

Since 2MeTHF can be produced from bio-based raw materials, it is useful to obtain polyurethanes that exhibit the same or better physical properties as conventional polyurethanes and are highly environmentally compatible.

Industrial Applicability

The acid-resistant polyurethanes obtained by using polytetramethylene ether glycol according to the present invention are useful as polyurethane resin materials with less deterioration in the physical properties (breaking strength, elongation at break, etc.) of the resin due to acid than conventional polyurethanes.

**Claims**

1.    An acid-resistant polyurethane obtained from polytetramethylene ether glycol consisting of a copolymer of tetrahydrofuran and 2-methyltetrahydrofuran, wherein a retention rate of breaking strength or breaking elongation before and after acid treatment is 100% or more to 200% or less.

2.    The acid-resistant polyurethane according to claim 1, wherein a number average molecular weight of the polytetramethylene ether glycol is 500 or more to 5000 or less.

3.    The acid-resistant polyurethane according to claim 1, wherein a biobased carbon content of the 2-methyltetrahydrofuran is 95% to 100%.

4.    The acid-resistant polyurethane according to claim 1, wherein a molar ratio of the monomer-derived components of tetrahydrofuran and 2-methyltetrahydrofuran in the polytetramethylene ether glycol is 97:3 to 88:12.

5.    The acid-resistant polyurethane according to claim 1, wherein a ratio of the biomass-derived raw material contained in the polytetramethylene ether glycol is 3 mass% or more to 100 mass% or less.

## INTERNATIONAL SEARCH REPORT

| International application No. |
| --- |
| **PCT/JP2024/012315** |

| A. | CLASSIFICATION OF SUBJECT MATTER |
| --- | --- |

*C08G 18/48*(2006.01)i; *C08G 65/20*(2006.01)i
FI:  C08G18/48 054; C08G65/20

According to International Patent Classification (IPC) or to both national classification and IPC

| B. | FIELDS SEARCHED |
| --- | --- |

Minimum documentation searched (classification system followed by classification symbols)

C08G18/48: C08G65/20

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 112194786 A (SHANGHAI CARTHANE CO., LTD.) 08 January 2021 (2021-01-08) claim 1, example 2 | 1-2, 4 |
| Y | | 3, 5 |
| X | WO 2018/220983 A1 (HODOGAYA CHEMICAL CO., LTD.) 06 December 2018 (2018-12-06) claims 1-8, paragraph [0028], examples 1-8 | 1-3, 5 |
| Y | | 3, 5 |
| A | | 4 |

☐ Further documents are listed in the continuation of Box C.       ☑ See patent family annex.

| | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **19 April 2024** | **07 May 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

**INTERNATIONAL SEARCH REPORT**
Information on patent family members

International application No.

**PCT/JP2024/012315**

| Patent document cited in search report | | | Publication date (day/month/year) | Patent family member(s) | | | Publication date (day/month/year) |
|---|---|---|---|---|---|---|---|
| CN | 112194786 | A | 08 January 2021 | (Family: none) | | | |
| WO | 2018/220983 | A1 | 06 December 2018 | US | 2020/0087439 | A1 | |
| | | | | claims 1-8, paragraph [0032], examples 1-8 | | | |
| | | | | EP | 3632958 | A1 | |
| | | | | CN | 110603281 | A | |
| | | | | TW | 201900725 | A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011162780 A
- JP 4144656 B
- JP 2018220983 A
- JP 2015152066 A
- JP 2018119107 A
- WO 2023145554 A
- WO 2018220983 A